# EUROPEAN PATENT APPLICATION

(11) **EP 4 006 098 A1**
(43) Date of publication of application: **01.06.2022**
(21) Application number: 21186346.9
(22) Date of filing: 19.07.2021
(51) Int. Cl.: C08L 25/12, C08L 55/02, C08L 67/02, B60R 13/02

(54) **COMPOSITE RESIN COMPOSITION FOR AUTOMOTIVE INTERIOR MATERIALS AND AUTOMOTIVE INTERIOR MATERIAL USING THE SAME**

(30) Priority: 25.11.2020 KR 20200159423
(71) Applicant: HYUNDAI MOTOR COMPANY, Seoul 06797 (KR); Kia Corporation, Seocho-gu Seoul 06797 (KR); LG Chem, Ltd., Seoul 07336, (KR)
(72) Inventor: AHN, Jin Gi, Hwaseong-si, Gyeonggi-do (KR); AN, Boo Youn, Hwaseong-si, Gyeonggi-do (KR); KIM, Dae Sik, Hwaseong-si, Gyeonggi-do (KR); JANG, Kyeong Hoon, Hwaseong-si, Gyeonggi-do (KR); YI, Seul, Hwaseong-si, Gyeonggi-do (KR); HAN, In Soo, Hwaseong-si, Gyeonggi-do (KR); LEE, Han Ki, Hwaseong-si, Gyeonggi-do (KR); JUN, Yi Seul, Daejeon (KR); PARK, Jae Chan, Daejeon (KR); KO, Gun, Daejeon (KR)
(74) Representative: Isarpatent

(57) **Abstract**

The present disclosure relates to a composite resin composition for automotive interior materials and an automotive interior material using the same. The composite resin composition includes a polyester-based resin satisfying a specific intrinsic viscosity range and a vinyl cyanide compound-conjugated diene compound-aromatic vinyl compound copolymer and an aromatic vinyl compound-vinyl cyanide compound copolymer satisfying specific melt index ranges. The automotive interior material manufactured using the composite resin composition has advantages in that the automotive interior material is used as an unpainted product while cost is reduced due to material improvement, whereby it is possible to achieve high economic efficiency. In addition, the automotive interior material satisfies required physical properties, such as chemical resistance and mechanical strength, and at the same time exhibits high formability and noise resistance, whereby external appearance quality and emotional quality are improved.

## Description

### BACKGROUND

### (a) Technical Field

The present disclosure relates to a composite resin composition for automotive interior materials and an automotive interior material using the same.

### (b) Background Art

The material for a conventional automotive interior material (acrylonitrile butadiene styrene (ABS), a composite resin consisting of polycarbonate (PC) and acrylonitrile butadiene styrene (ABS), or a composite resin consisting of polycarbonate (PC) and acrylate styrene acrylonitrile (ASA)) exhibits excellent physical properties and paintability and thus is used for various parts of the automotive interior material.

However, the material exhibits low formability, whereby external appearance quality is deteriorated. In addition, the material exhibits low resistance to chemicals, such as an aromatic, and the unit cost thereof is somewhat high.

In particular, for automobiles that will be developed hereafter, most automotive interior materials will be changed from a cover type to an open type, and therefore various properties for external appearance quality and unpainted material application are required.

Therefore, there is a need to develop the material for an automotive interior material that is provided as an unpainted product, whereby development cost is reduced, that satisfies required physical properties, such as chemical resistance and light resistance, and that exhibits excellent formability and noise resistance.

The above information disclosed in this Background section is provided only for enhancement of understanding of the background of the disclosure and therefore it may contain information that does not form the prior art that is already known in this country to a person of ordinary skill in the art.

### SUMMARY OF THE DISCLOSURE

The present disclosure has been made in an effort to solve the above-described problems associated with the prior art.

It is an object of the present disclosure to provide a composite resin composition for automotive interior materials, the composite resin composition including 30 to 35 wt% of a polyester-based resin having an intrinsic viscosity of 0.99 to 1.09 dl/g, 25 to 30 wt% of a vinyl cyanide compound-conjugated diene compound-aromatic vinyl compound copolymer; and 35 to 40 wt% of an aromatic vinyl compound-vinyl cyanide compound copolymer, and an automotive interior material including the same.

The objects of the present disclosure are not limited to those described above. The objects of the present disclosure will be clearly understood from the following description and could be implemented by means defined in the claims and a combination thereof.

In one aspect, the present disclosure provides a composite resin composition for automotive interior materials, the composite resin composition including 30 to 35 wt% of a polyester-based resin, 25 to 30 wt% of a vinyl cyanide compound-conjugated diene compound-aromatic vinyl compound copolymer, and 35 to 40 wt% of an aromatic vinyl compound-vinyl cyanide compound copolymer.

The polyester-based resin may have an intrinsic viscosity of 0.99 to 1.09 dl/g.

The polyester-based resin may include at least one selected from the group consisting of polybutylene terephthalate (PBT), polyethylene adipate (PEA), polybutylene succinate (PBS), polyethylene terephthalate (PET), polytrimethylene terephthalate (PTT), and polyethylene naphthalate (PEN).

The vinyl cyanide compound-conjugated diene compound-aromatic vinyl compound copolymer may include a graft copolymer obtained as the result of graft polymerization of 40 to 80 wt% of a conjugated diene compound, 10 to 40 wt% of an aromatic vinyl compound, and 1 to 20 wt% of a vinyl cyanide compound.

The vinyl cyanide compound-conjugated diene compound-aromatic vinyl compound copolymer may include acrylonitrile butadiene styrene (ABS).

The aromatic vinyl compound-vinyl cyanide compound copolymer may include a copolymer obtained as the result of polymerization of 60 to 80 wt% of an aromatic vinyl compound and 20 to 40 wt% of a vinyl cyanide compound.

The aromatic vinyl compound-vinyl cyanide compound copolymer may have a weight average molecular weight of 120,000 to 150,000 g/mol.

The aromatic vinyl compound-vinyl cyanide compound copolymer may include styrene acrylonitrile (SAN).

The composite resin composition may further include an additive including at least one selected from the group consisting of a lubricant, a heat stabilizer, and an ultraviolet absorber.

In another aspect, the present disclosure provides an automotive interior material including the composite resin composition.

The automotive interior material may be at least one selected from the group consisting of a floor console front tray, a cup holder, an inner garnish, a switch bezel, a cup holder housing, and an indicator panel.

### DETAILED DESCRIPTION

The objects described above, and other objects, features and advantages will be clearly understood from the following preferred embodiments. However, the present disclosure is not limited to the embodiments and will be embodied in different forms. The embodiments are suggested only to offer thorough and complete understanding of the disclosed contents and sufficiently inform those skilled in the art of the technical concept of the present disclosure.

It will be further understood that the terms "comprises", "has" and the like, when used in this specification, specify the presence of stated features, numbers, steps, operations, elements, components or combinations thereof, but do not preclude the presence or addition of one or more other features, numbers, steps, operations, elements, components, or combinations thereof.

Unless the context clearly indicates otherwise, all numbers, figures and/or expressions that represent ingredients, reaction conditions, polymer compositions and amounts of mixtures used in the specification are approximations that reflect various uncertainties of measurement occurring inherently in obtaining these figures among other things. For this reason, it should be understood that, in all cases, the term "about" should modify all numbers, figures and/or expressions. In addition, when numeric ranges are disclosed in the description, these ranges are continuous and include all numbers from the minimum to the maximum including the maximum within the range unless otherwise defined. Furthermore, when the range refers to an integer, it includes all integers from the minimum to the maximum including the maximum within the range, unless otherwise defined.

It should be understood that, in the specification, when the range refers to a parameter, the parameter encompasses all figures including end points disclosed within the range. For example, the range of "5 to 10" includes figures of 5, 6, 7, 8, 9, and 10, as well as arbitrary sub-ranges such as ranges of 6 to 10, 7 to 10, 6 to 9, and 7 to 9, and any figures, such as 5.5, 6.5, 7.5, 5.5 to 8.5 and 6.5 to 9, between appropriate integers that fall within the range. In addition, for example, the range of "10% to 30%" encompasses all integers that include figures such as 10%, 11%, 12% and 13%, as well as 30%, and any sub-ranges of 10% to 15%, 12% to 18%, or 20% to 30%, as well as any figures, such as 10.5%, 15.5% and 25.5%, between appropriate integers that fall within the range.

The inventors of the present application have developed an automotive interior material as an unpainted product having high formability and noise resistance while satisfying required physical properties, such as chemical resistance and light resistance, and have found that an automotive interior material manufactured using a composite resin composition for automotive interior materials including specific contents of a polyester-based resin satisfying a specific intrinsic viscosity range and a vinyl cyanide compound-conjugated diene compound-aromatic vinyl compound copolymer and an aromatic vinyl compound-vinyl cyanide compound copolymer, each of which is a copolymer polymerized from a precursor having a specific content range, has the above properties. The present disclosure has been completed based on these findings.

A composite resin composition for automotive interior materials according to an embodiment of the present disclosure includes 30 to 35 wt% of a polyester-based resin, 25 to 30 wt% of a vinyl cyanide compound-conjugated diene compound-aromatic vinyl compound copolymer, and 35 to 40 wt% of an aromatic vinyl compound-vinyl cyanide compound copolymer.

A polyester-based resin according to an embodiment of the present disclosure is a crystalline material, and is not particularly restricted as long as it is possible to provide formability to a composite resin composition including the same such that an automotive interior material manufactured using the same exhibits chemical resistance.

The polyester-based resin may have an intrinsic viscosity of 0.99 to 1.09 dl/g. If the intrinsic viscosity of the polyester-based resin is too low while deviating from the above range, a physical property reinforcement effect is reduced, whereby a chemical resistance improvement effect is insufficient. If the intrinsic viscosity of the polyester-based resin is too high, formability is reduced, whereby the external appearance of a part is deteriorated.

The polyester-based resin may include at least one selected from the group consisting of polybutylene terephthalate (PBT), polyethylene adipate (PEA), polybutylene succinate (PBS), polyethylene terephthalate (PET), polytrimethylene terephthalate (PTT), and polyethylene naphthalate (PEN) as a resin that satisfies the above intrinsic viscosity. Preferably, the polyester-based resin includes polybutylene terephthalate (PBT), which has a crystallized structure and thus is capable of improving the melt flow rate of a composite resin composition including the same at the time of injection molding, thereby improving quality of the external appearance thereof, while preventing permeation of chemicals introduced from the outside, as a crystalline resin, although not limited as including a specific ingredient.

The content of the polyester-based resin may be 30 to 35 wt% based on 100 wt% of the composite resin composition for automotive interior materials. If the content of the polyester-based resin is less than 30 wt%, cracks are formed in an automotive interior material manufactured using a composite resin composition including the same. If the content of the polyester-based resin is greater than 35 wt%, rigidity and heat resistance of an automotive interior material manufactured using a composite resin composition including the same are reduced.

That is, the polyester-based resin according to the embodiment of the present disclosure has an intrinsic viscosity of 0.99 to 1.09 dl/g, includes polybutylene terephthalate (PBT), which is a crystalline resin, and satisfies a content of 30 to 35 wt% based on 100 wt% of the composite resin composition for automotive interior materials. Consequently, the polyester-based resin may provide formability to a composite resin composition and thus may provide chemical resistance to an automotive interior material manufactured using the same.

A vinyl cyanide compound-conjugated diene compound-aromatic vinyl compound copolymer according to an embodiment of the present disclosure is not particularly restricted as long as it is possible to improve impact resistance of an automotive interior material manufactured using a composite resin composition including the same in order to supplement physical properties reduced due to the polyester-based resin.

The vinyl cyanide compound-conjugated diene compound-aromatic vinyl compound copolymer may be a graft copolymer obtained as the result of graft polymerization of 40 to 80 wt% of a conjugated diene compound, 10 to 40 wt% of an aromatic vinyl compound, and 1 to 20 wt% of a vinyl cyanide compound, preferably 50 to 70 wt% of a conjugated diene compound, 20 to 35 wt% of an aromatic vinyl compound, and 1 to 15 wt% of a vinyl cyanide compound, more preferably 55 to 65 wt% of a conjugated diene compound, 25 to 35 wt% of an aromatic vinyl compound, and 5 to 15 wt% of a vinyl cyanide compound. If the content of the conjugated diene compound is too low while deviating from the above range, impact resistance is reduced. If the content of the conjugated diene compound is too high, rigidity (modulus of elasticity) is reduced. Also, if the content of the vinyl cyanide compound is too low, a rigidity reinforcement effect is insufficient. If the content of the vinyl cyanide compound is too high, impact resistance is reduced.

The conjugated diene compound included in the vinyl cyanide compound-conjugated diene compound-aromatic vinyl compound copolymer may include a normal conjugated diene compound that can be used in the present disclosure, e.g. butadiene, although not limited as including only a specific conjugated diene compound. In addition, the aromatic vinyl compound included in the vinyl cyanide compound-conjugated diene compound-aromatic vinyl compound copolymer may include a normal aromatic vinyl compound that can be used in the present disclosure, e.g. styrene, although not limited as including only a specific aromatic vinyl compound. In addition, the vinyl cyanide compound included in the vinyl cyanide compound-conjugated diene compound-aromatic vinyl compound copolymer may include a normal vinyl cyanide compound that can be used in the present disclosure, e.g. acrylonitrile, although not limited as including only a specific vinyl cyanide compound.

Consequently, the vinyl cyanide compound-conjugated diene compound-aromatic vinyl compound copolymer preferably includes acrylonitrile butadiene styrene (ABS), which appropriately includes butadiene and thus is capable of greatly improving impact resistance, as a resin obtained as the result of polymerization of the above ingredients having the specific content ranges.

The content of the vinyl cyanide compound-conjugated diene compound-aromatic vinyl compound copolymer may be 25 to 30 wt% based on 100 wt% of the composite resin composition for automotive interior materials. If the content of the vinyl cyanide compound-conjugated diene compound-aromatic vinyl compound copolymer is too low, impact resistance of an automotive interior material manufactured using a composite resin composition including the same is reduced. If the content of the vinyl cyanide compound-conjugated diene compound-aromatic vinyl compound copolymer is too high, rigidity of an automotive interior material manufactured using a composite resin composition including the same is reduced.

An aromatic vinyl compound-vinyl cyanide compound copolymer according to an embodiment of the present disclosure is not particularly restricted as long as it is possible to improve rigidity of an automotive interior material manufactured using a composite resin composition including the same in order to supplement rigidity reduced due to improvement in impact resistance of the vinyl cyanide compound-conjugated diene compound-aromatic vinyl compound copolymer.

The aromatic vinyl compound-vinyl cyanide compound copolymer may be a copolymer obtained as the result of polymerization of 60 to 80 wt% of an aromatic vinyl compound and 20 to 40 wt% of a vinyl cyanide compound, preferably 65 to 75 wt% of an aromatic vinyl compound and 25 to 35 wt% of a vinyl cyanide compound.

The aromatic vinyl compound included in the aromatic vinyl compound-vinyl cyanide compound copolymer may include a normal aromatic vinyl compound that can be used in the present disclosure, e.g. styrene, although not limited as including only a specific aromatic vinyl compound. In addition, the vinyl cyanide compound included in the aromatic vinyl compound-vinyl cyanide compound copolymer may include a normal vinyl cyanide compound that can be used in the present disclosure, e.g. acrylonitrile, although not limited as including only a specific vinyl cyanide compound.

Consequently, the aromatic vinyl compound-vinyl cyanide compound copolymer preferably includes styrene acrylonitrile (SAN), which is capable of greatly improving rigidity of an automotive interior material including the same, as a resin obtained as the result of polymerization of the above ingredients having the specific content ranges.

The content of the aromatic vinyl compound-vinyl cyanide compound copolymer may be 35 to 40 wt% based on 100 wt% of the composite resin composition for automotive interior materials. If the content of the aromatic vinyl compound-vinyl cyanide compound copolymer is too low while deviating from the above range, rigidity of an automotive interior material manufactured using a composite resin composition including the same is reduced. If the content of the aromatic vinyl compound-vinyl cyanide compound copolymer is too high, impact resistance of an automotive interior material manufactured using a composite resin composition including the same is reduced.

That is, the composite resin composition for automotive interior materials according to the embodiment of the present disclosure includes copolymers obtained as the result of polymerization of ingredients having specific content ranges, e.g. 25 to 30 wt% of a vinyl cyanide compound-conjugated diene compound-aromatic vinyl compound copolymer and 35 to 40 wt% of an aromatic vinyl compound-vinyl cyanide compound copolymer. Consequently, it is possible to harmoniously secure impact resistance and rigidity of an automotive interior material manufactured using the composite resin composition.

The composite resin composition for automotive interior materials according to the embodiment of the present disclosure may further include various additives in order to improve the melt flow rate thereof and to prevent decomposition and denaturation thereof due to temperature and light.

Specifically, an additive according to an embodiment of the present disclosure may include at least one selected from the group consisting of a lubricant, a heat stabilizer, and an ultraviolet absorber.

The lubricant is not particularly restricted as long as it is possible to secure easy ejection and the melt flow rate of an injector screw used to manufacture an automotive interior material from a composite resin composition for automotive interior materials including the same.

Preferably, the lubricant includes a polyethylene-wax-based lubricant as a lubricant that can be used in the present disclosure and is capable of securing the above properties, although not limited as including a specific ingredient.

The content of the lubricant may be 0.1 to 1 wt% based on 100 wt% of the composite resin composition for automotive interior materials. If the content of the lubricant is too high while deviating from the above range, the surface of an automotive interior material manufactured using a composite resin composition including the same is spotted, whereby quality of the external appearance of the automotive interior material is reduced.

The heat stabilizer is not particularly restricted as long as it is possible to prevent an automotive interior material manufactured using a composite resin composition including the same from being denatured due to temperature.

Preferably, the heat stabilizer includes a high-phenolic-antioxidant-based heat stabilizer as a heat stabilizer that can be used in the present disclosure and is capable of securing the above properties, although not limited as including a specific ingredient.

The content of the heat stabilizer may be 0.1 to 1 wt% based on 100 wt% of the composite resin composition for automotive interior materials. If the content of the heat stabilizer is too high while deviating from the above range, the surface of an automotive interior material manufactured using a composite resin composition including the same is spotted, whereby quality of the external appearance of the automotive interior material is reduced.

The ultraviolet absorber is not particularly restricted as long as it is possible to prevent an automotive interior material manufactured using a composite resin composition including the same from being denatured due to light.

Preferably, the ultraviolet absorber includes a hydroxyphenyl-benzotriazole-based ultraviolet absorber as an ultraviolet absorber that can be used in the present disclosure and is capable of securing the above properties, although not limited as including a specific ingredient.

The content of the ultraviolet absorber may be 0.1 to 1 wt% based on 100 wt% of the composite resin composition for automotive interior materials. If the content of the ultraviolet absorber is too high while deviating from the above range, the surface of an automotive interior material manufactured using a composite resin composition including the same is spotted, whereby quality of the external appearance of the automotive interior material is reduced.

An automotive interior material according to an embodiment of the present disclosure includes the composite resin composition for automotive interior materials.

Specifically, the automotive interior material may be at least one selected from the group consisting of a floor console front tray, a cup holder, an inner garnish, a switch bezel, a cup holder housing, and an indicator panel, although not limited to a specific kind.

That is, the composite resin composition for automotive interior materials according to the embodiment of the present disclosure includes a polyester-based resin satisfying a specific intrinsic viscosity range and a vinyl cyanide compound-conjugated diene compound-aromatic vinyl compound copolymer and an aromatic vinyl compound-vinyl cyanide compound copolymer, each of which is a copolymer obtained as the result of polymerization of ingredients having specific content ranges. The automotive interior material manufactured using the composite resin composition has advantages in that the automotive interior material is used as an unpainted product while cost is reduced due to material improvement, whereby it is possible to achieve high economic efficiency. In addition, the automotive interior material manufactured using the composite resin composition satisfies required physical properties, such as chemical resistance and mechanical strength, and at the same time exhibits high formability and noise resistance, whereby external appearance quality and emotional quality are improved.

Hereinafter, the present disclosure will be described in more detail with reference to examples. However, the following examples are merely an illustration to assist in understanding the present disclosure, and the present disclosure is not limited by the following examples.

### Examples 1 and 2 and Comparative Examples 1 to 8: Manufacture of composite resin compositions for automotive interior materials

Raw materials for a composite resin composition shown in Table 1 below were mixed and extruded to manufacture a pellet having a uniform degree of dispersion. Subsequently, the pellet was heated, injected into a mold, and cooled through an injection process for producing a part to manufacture an automotive interior material sample.

**Table 1**

| Classification | Example 1 | Example 2 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Polyester-based resin (Intrinsic viscosity: 1.1) | | | 34 | | | | | | | |
| Polyester-based resin (Intrinsic viscosity: 1.0) | 32 | 34 | | | | 34 | 34 | 34 | 45 | 55 |
| Polyester-based resin (Intrinsic viscosity: 0.9) | | | | 34 | | | | | | |
| Polyester-based resin (Intrinsic viscosity: 0.8) | | | | | 34 | | | | | |
| Vinyl cyanide compound-conjugated diene compound-aromatic vinyl compound copolymer | 27 | 27 | 27 | 27 | 27 | 18 | 24 | 34 | 30 | 24 |
| Aromatic vinyl compound-vinyl cyanide compound copolymer | 40 | 38 | 38 | 38 | 38 | 47 | 41 | 31 | 24 | 20 |
| Lubricant | 0.3 | 0.3 | 0.3 | 0.3 | 0.3 | 0.3 | 0.3 | 0.3 | 0.3 | 0.3 |
| Heat stabilizer | 0.4 | 0.4 | 0.4 | 0.4 | 0.4 | 0.4 | 0.4 | 0.4 | 0.4 | 0.4 |
| Ultraviolet absorber | 0.3 | 0.3 | 0.3 | 0.3 | 0.3 | 0.3 | 0.3 | 0.3 | 0.3 | 0.3 |
| Total | 100 | 100 | 100 | 100 | 100 | 100 | 100 | 100 | 100 | 100 |

| | | | | | | | | | | |
|---|---|---|---|---|---|---|---|---|---|---|
| * Polyester-based resin: PBT * Vinyl cyanide compound-conjugated diene compound-aromatic vinyl compound copolymer: ABS including 50 to 70 wt% of butadiene, 20 to 35 wt% of styrene, and 1 to 15 wt% of acrylonitrile (LG Chem) * Aromatic vinyl compound-vinyl cyanide compound copolymer: SAN including 65 to 75 wt% of styrene and 25 to 35 wt% of acrylonitrile (LG Chem) | | | | | | | | | | |

### Experimental Example: Evaluation of physical properties of automotive interior material samples

Physical properties of automotive interior material samples manufactured according to Examples 1 and 2 and Comparative Examples 1 to 8 were evaluated. Evaluation criteria are as follows.
- Melt flow rate: Performed based on ISO 1133 (230°C, 10 kg)
- Impact strength: Performed based on ISO 180/1A (Notched, 23°C)
- Tensile strength: Performed based on ISO 527 (50 mm/min)
- Flexural strength and flexural modulus: Performed based on ISO 178 (1/8 inch, SPAN 64, speed of 2 mm/min, 4x10 inputs)
- Heat deflection temperature: Performed based on ISO 75 (0.45 MPa)
- Chemical resistance test: Environmental stress cracking (ESC) test, Performed based on ISO 4599
- Noise resistance test: Performed based on Ziegler SSP-04
- Light resistance test: Performed based on MS210-05 (84MJ, Glossy samples/Embossed samples)

The results of measurement based on the above evaluation criteria are shown in Table 2 below.

**Table 2**

| Classification | Example 1 | Example 2 | Comparative Example 1 | Comparative Example 2 | Comparative Example 3 | Comparative Example 4 | Comparative Example 5 | Comparative Example 6 | Comparative Example 7 | Comparative Example 8 | Target value | |
|---|---|---|---|---|---|---|---|---|---|---|---|---|
| Melt flow rate (g/10min) | 28 | 30 | 10 | 38 | 44 | 32 | 25 | 24 | 32 | 36 | 28 ↑ | |
| Impact strength (kJ/m²) | 42.8 | 17.5 | 42.8 | 14.0 | 10.2 | 10.6 | 13.0 | 22.4 | 19.5 | 15.4 | 15 ↑ | |
| Tensile strength (MPa) | 39.5 | 40.5 | 40.5 | 40.0 | 40.0 | 39.5 | 40.0 | 35.6 | 31.9 | 34.6 | 39 ↑ | |
| Flexural strength (MPa) | 58.4 | 61.1 | 61.4 | 59.0 | 58.0 | 66.1 | 60.0 | 51.6 | 47.4 | 53.3 | 58 ↑ | |
| Flexural modulus (MPa) | 1820 | 1830 | 1840 | 1850 | 1850 | 1910 | 1850 | 1480 | 1355 | 1485 | 1,800 ↑ | |
| Heat deflection temperature (°C) | | 92.6 | 93.8 | 92.6 | 96.3 | 96.3 | 98.4 | 94.0 | 97.4 | 89.4 | 86.2 | 92 ↑ |
| Density | | 1.11 | 1.11 | 1.11 | 1.11 | 1.11 | 1.11 | 1.11 | 1.11 | 1.12 | 1.15 | 1.12± 0.02 |
| Chemical resistance | | Normal | Normal | Norm al | Craze | Craze | Norm al | Norm al | Norm al | Norm al | Norm al | Normal |
| Noise resistance (Friction) (RPN grade) | 10N, 1mm/s | 3 | 3 | 3 | 3 | 3 | 3 | 3 | 3 | 3 | 3 | 3↓ |
| | 10N, 4mm/s | 2 | 2 | 2 | 2 | 2 | 2 | 2 | 2 | 2 | 2 | 2↓ |
| | 40N, 1mm/s | 2 | 2 | 2 | 2 | 2 | 2 | 2 | 2 | 2 | 2 | 2 ↓ |
| | 40N, 4mm/s | 1 | 1 | 1 | 1 | 1 | 1 | 1 | 1 | 1 | 1 | 1 ↓ |
| Light resistance (ΔE) | Glossy sample | 1.1 | 1.1 | 1.1 | 1.1 | 1.1 | 1.1 | 1.1 | 1.1 | 1.1 | 1.1 | 2.0 ↓ |
| | Embos sed sample | 1.0 | 1.0 | 1.0 | 0.9 | 0.9 | 1.0 | 1.0 | 1.0 | 1.0 | 1.0 | 2.0 ↓ |

Referring to Table 2 above, it can be seen that the composite resin compositions for automotive interior materials manufactured according to Examples 1 and 2, which satisfied properties and contents of the present disclosure, had high melt flow rate, and therefore the automotive interior materials manufactured using the same exhibit high chemical resistance and noise resistance while satisfying physical properties, such as impact strength, tensile strength, and flexural strength. In contrast, it can be seen that Comparative Example 1, in which intrinsic viscosity of the polyester-based resin was relatively high, exhibited low melt flow rate and that Comparative Examples 2 and 3, in each of which intrinsic viscosity of the polyester-based resin was relatively low, exhibited poor physical properties, such as impact strength and flexural strength, while exhibiting high melt flow rate.

In addition, it can be seen that Comparative Examples 4 to 6, in which the content of the vinyl cyanide compound-conjugated diene compound-aromatic vinyl compound copolymer and/or the aromatic vinyl compound-vinyl cyanide compound copolymer deviated from the content range of the present disclosure, exhibited lower physical properties, such as impact strength and flexural strength, while exhibiting lower melt flow rate than Examples 1 and 2.

Furthermore, it can be seen that Comparative Examples 7 and 8, in which the content of the polyester-based resin and the content of the vinyl cyanide compound-conjugated diene compound-aromatic vinyl compound copolymer and/or the aromatic vinyl compound-vinyl cyanide compound copolymer deviated from the content ranges of the present disclosure, exhibited lower physical properties, such as impact strength and flexural strength, than Examples 1 and 2.

That is, the composite resin composition for automotive interior materials according to the embodiment of the present disclosure includes a polyester-based resin satisfying a specific intrinsic viscosity range and a vinyl cyanide compound-conjugated diene compound-aromatic vinyl compound copolymer and an aromatic vinyl compound-vinyl cyanide compound copolymer satisfying specific melt index ranges. The automotive interior material manufactured using the composite resin composition has advantages in that the automotive interior material is used as an unpainted product while cost is reduced due to material improvement, whereby it is possible to achieve high economic efficiency. In addition, the automotive interior material manufactured using the composite resin composition satisfies required physical properties, such as chemical resistance and mechanical strength, and at the same time exhibits high formability and noise resistance, whereby external appearance quality and emotional quality are improved.

As is apparent from the foregoing, a composite resin composition for automotive interior materials according to the present disclosure includes a polyester-based resin satisfying a specific intrinsic viscosity range and a vinyl cyanide compound-conjugated diene compound-aromatic vinyl compound copolymer and an aromatic vinyl compound-vinyl cyanide compound copolymer, each of which is a copolymer obtained as the result of polymerization of ingredients having specific content ranges.

Consequently, an automotive interior material manufactured using the composite resin composition has advantages in that the automotive interior material is used as an unpainted product while cost is reduced due to material improvement, whereby it is possible to achieve high economic efficiency.

In addition, the automotive interior material manufactured using the composite resin composition satisfies required physical properties, such as chemical resistance and mechanical strength, and at the same time exhibits high formability and noise resistance, whereby external appearance quality and emotional quality are improved.

The effects of the present disclosure are not limited to those mentioned above. It should be understood that the effects of the present disclosure include all effects that can be inferred from the foregoing description of the present disclosure.

The disclosure has been described in detail with reference to preferred embodiments thereof. However, it will be appreciated by those skilled in the art that changes may be made in these embodiments without departing from the principles and spirit of the disclosure, the scope of which is defined in the appended claims and their equivalents.

## Claims

1. A composite resin composition for automotive interior materials, the composite resin composition comprising:
30 to 35 wt% of a polyester-based resin;
25 to 30 wt% of a vinyl cyanide compound-conjugated diene compound-aromatic vinyl compound copolymer; and
35 to 40 wt% of an aromatic vinyl compound-vinyl cyanide compound copolymer.

2. The composite resin composition according to claim 1, wherein the polyester-based resin has an intrinsic viscosity of 0.99 to 1.09 dl/g.

3. The composite resin composition according to claim 1, wherein the polyester-based resin comprises at least one selected from a group consisting of: polybutylene terephthalate (PBT), polyethylene adipate (PEA), polybutylene succinate (PBS), polyethylene terephthalate (PET), polytrimethylene terephthalate (PTT), and polyethylene naphthalate (PEN).

4. The composite resin composition according to claim 1, wherein the vinyl cyanide compound-conjugated diene compound-aromatic vinyl compound copolymer comprises a graft copolymer obtained as a result of graft polymerization of 40 to 80 wt% of a conjugated diene compound, 10 to 40 wt% of an aromatic vinyl compound, and 1 to 20 wt% of a vinyl cyanide compound.

5. The composite resin composition according to claim 1, wherein the vinyl cyanide compound-conjugated diene compound-aromatic vinyl compound copolymer comprises acrylonitrile butadiene styrene (ABS).

6. The composite resin composition according to claim 1, wherein the aromatic vinyl compound-vinyl cyanide compound copolymer comprises a copolymer obtained as a result of polymerization of 60 to 80 wt% of an aromatic vinyl compound and 20 to 40 wt% of a vinyl cyanide compound.

7. The composite resin composition according to claim 1, wherein the aromatic vinyl compound-vinyl cyanide compound copolymer has a weight average molecular weight of 120,000 to 150,000 g/mol.

8. The composite resin composition according to claim 1, wherein the aromatic vinyl compound-vinyl cyanide compound copolymer comprises styrene acrylonitrile (SAN).

9. The composite resin composition according to claim 1, further comprising an additive comprising at least one selected from a group consisting of a lubricant, a heat stabilizer, and an ultraviolet absorber.

10. An automotive interior material comprising the composite resin composition according to claim 1.

11. The automotive interior material according to claim 10, wherein the automotive interior material is at least one selected from a group consisting of a floor console front tray, a cup holder, an inner garnish, a switch bezel, a cup holder housing, and an indicator panel.
